# EUROPEAN PATENT SPECIFICATION

(11) **EP 4 526 241 B1**
(45) Date of publication and mention of the grant of the patent: **07.10.2026**
(21) Application number: 23725965.0
(22) Date of filing: 08.05.2023
(51) Int. Cl.: B66B 1/34

(54) **METHOD OF MONITORING AN ELEVATOR CAR IN AN ELEVATOR SHAFT AND SAFETY SYSTEM FOR MONITORING AN ELEVATOR CAR IN AN ELEVATOR SHAFT**
VERFAHREN ZUM ÜBERWACHEN EINER AUFZUGKABINE IN EINEM AUFZUGSCHACHT UND SICHERHEITSSYSTEM ZUM ÜBERWACHEN EINER AUFZUGKABINE IN EINEM AUFZUGSCHACHT
PROCÉDÉ DE SURVEILLANCE D'UNE CABINE D'ASCENSEUR DANS UNE CAGE D'ASCENSEUR ET SYSTÈME DE SÉCURITÉ POUR LA SURVEILLANCE D'UNE CABINE D'ASCENSEUR DANS UNE CAGE D'ASCENSEUR

(30) Priority: 16.05.2022 EP 22173552
(43) Date of publication of application: 26.03.2025
(73) Proprietor: INVENTIO AG, 6052 Hergiswil (CH)
(72) Inventor: PERFETTO, Antonio, 6030 Ebikon (CH); VILLA, Valerio, 22041 Colverde (IT); ZINGG, Simon, 8302 Kloten (CH); PFISTER, Martin, 6003 Luzern (CH)
(74) Representative: Inventio AG
(86) International application number: PCT/EP2023/062084
(87) International publication number: WO 2023/222422

(56) References cited:
- EP-A2- 2 527 281
- WO-A1-2020/193278

## Description

The present invention relates to a method and safety system for monitoring an elevator car in an elevator shaft, particularly for reliably determining the elevator car position, speed and/or acceleration based on multiple sensor inputs. Aspects of the invention relate to the implementation of an estimation algorithm to estimate the position, speed and/or acceleration of the elevator car and determining a sensor reliability parameter.

According to a further aspect, the invention relates to the use of output data generated by the method described herein, or generated by the safety system described herein, for determining a safety state of an elevator installation. The output data may comprise one or more of an estimated position, an estimated speed and/or an estimated acceleration of the elevator car.

Elevator installations are known in the art. An elevator includes an elevator shaft or hoistway and an elevator car movably provided within the elevator shaft. Elevators suitable for transporting passengers must generally conform to high safety standards. For safety, parameters of the elevator car traveling in the elevator shaft may be monitored and evaluated by safety systems. Such parameters may include acceleration, speed and/or position of the elevator car. In case a parameter falls outside a safe range, the safety system may indicate an unsafe state, and the elevator installation may respond by e.g. applying brakes or causing the elevator car to travel at reduced speed. The acceptable range of a parameter may be defined in relationship to the value of other parameters. For example, an acceptable speed toward an end of the hoistway may be reduced with respect to the acceptable speed in the middle of the hoistway.

By combining different sensor types, various safety-relevant parameters may be measured and evaluated by the safety system. However, the reliability or the accuracy of some sensor types may be limited, which, if each sensor is evaluated independently, could cause an inaccurate evaluation of the state of the elevator installation, which may result in false alarms or even unsafe states.

Furthermore, the different sensors used in conventional elevator installations, such as overspeed governors or overtravel protection systems, are typically installed at different places within the elevator installation and thus difficult to install or maintain.

It is therefore beneficial to provide an improved system or method for monitoring an elevator car within an elevator shaft. The present invention solves the above-stated problem at least in part.

Further background art is known from EP 2 527 281 A2 as well as from WO 2020/193278 A1. EP 2 527 281 A2 discloses a method of monitoring an elevator car according to the preamble of claim 1.

The invention is set out in the appended set of claims.

According to an aspect of the invention, a method of monitoring an elevator car in an elevator shaft is described. The method includes acquiring position data indicative of a position of the elevator car, acquiring motion data indicative of a motion of the elevator car, and determining, from a dynamical system model, an estimated position of the elevator car. The dynamical system model describes a motion of the elevator car based on input variables. The input variables include the position data and the motion data. The method further includes determining an offset value indicative of a motion data offset, wherein the offset value is generated such that the dynamical system model fits the position of the elevator car indicated by the position data, determining a sensor reliability parameter based on the offset value, and providing output data including the sensor reliability parameter.

According to an aspect of the invention, a safety system for monitoring an elevator car in an elevator shaft is described. The safety system includes a position sensor configured for acquiring position data indicative of a position of the elevator car, a motion sensor configured for acquiring motion data indicative of a motion of the elevator car, and an evaluation unit. The evaluation unit is configured for receiving input variables comprising the motion data and the position data, and determining, from a dynamical system model, an estimated position of the elevator car. The dynamical system model describes a motion of the elevator car based on input variables. The input variables include the position data and the motion data. The evaluation unit is further configured for determining an offset value indicative of a motion data offset. The offset value is generated such that the dynamical system model fits the position of the elevator car indicated by the position data. The evaluation unit is further configured for determining a sensor reliability parameter based on the offset value, and providing output data including the sensor reliability parameter.

According to a further aspect of the invention, use of the output data generated by a method as described herein or by a safety system as described herein is provided for determining a safety state of an elevator installation. The output data may include one or more of the estimated position, an estimated speed and/or an estimated acceleration of the elevator car.

According to an aspect, the acquiring of position data indicative of a position of the elevator car is described. The position data may be acquired by a position sensor. The position data may be indicative of a position of the elevator car within the elevator shaft, i.e. include information representing the location of the elevator car within the elevator shaft. The position may be an absolute position. In particular, the (absolute) position data may be data acquired by a sensor, and represent a measured position of the elevator car within the error margins of the sensor. For example, the position data may include a value indicative of a distance between the elevator car and a reference point, such as the shaft floor, the shaft top, or an arbitrary point located within the elevator shaft, at a given point in time. For example, the position data may be indicative of, or include a representation of a distance between the lowest landing door position in meters, however, this example is not to be understood as a limitation. Accordingly, the position sensor may be configured for sensing a distance between the elevator car and a reference point within the elevator shaft. The position data may beneficially be determined for any potential location of the elevator car within the elevator shaft, and may particularly not be limited to being determined only at specific positions of the elevator car within the elevator shaft, such as when the elevator car is in the vicinity of the landing doors. Accordingly, the position sensor may be configured for sensing the position of the elevator car at essentially any location of the elevator car within the elevator shaft. Additionally, or alternatively, the position data may be determined under conditions in which the position sensor may provide accurate readings, such as when the elevator car is travelling slowly, or even when the elevator car is in standstill.

According to embodiments, the position sensor may be an optical distance sensor, particularly a laser distance sensor. According to embodiments, the position sensor may be provided on the elevator car, such as on or adjacent the top or bottom of the outside of the elevator car, and may have a field of view including a reference point within the elevator shaft, such as at the top or bottom of the elevator shaft. According to embodiments, a reflector, such as a retroreflector or a reflective or mirror-like surface, may be provided at the reference point, however, the reflector may be optional and may be omitted if the reflectivity of the reference point is sufficient for the particular elevator installation. The distance sensor, particularly a laser distance sensor, may be configured for determining the distance between the distance sensor and the reference point by a time-of-flight measurement. Additionally, or alternatively, distance sensors, particularly optical distance sensors, utilizing triangulation, multiple frequency phase-shift and/or interferometry may be utilized without deriving from the scope of the invention.

According to alternative embodiments, the location of the distance sensor and the reference point may be inverted, e.g. the distance sensor may be provided at a fixed point within the elevator shaft, and the reference point may be provided on the elevator car. According to an aspect, the acquiring of motion data indicative of a motion of the elevator car is described. The motion data may be acquired by a motion sensor. The motion data may be, for example, indicative of a speed or a velocity of the elevator car and/or an acceleration of the elevator car. Motion data indicative of the elevator car standing still, i.e. having zero speed, and the elevator car having no acceleration, are considered motion data indicative of a motion of the elevator. Motion data indicative of a change of acceleration of the elevator car over time are considered motion data. Data indicative of a measurable parameter unrelated to the linear motion of the elevator car within the elevator shaft, such as, for example, a vibration of the elevator car measurable by an accelerometer, are generally not considered motion data. The motion data may include data representing a relative motion of the elevator car, such as information defining a relative motion with respect to a position of the elevator car. For example, the motion data may include a value indicating a difference between positions of the elevator car at different timepoints and/or a distance traveled between timepoints. Accordingly, a series of motion data indicative of a relative position over time, and/or a difference in relative position over time is considered motion data in the context of this invention.

According to an aspect, a motion sensor may include an accelerometer. The accelerometer can be configured for measuring at least an acceleration along the direction of travel of the elevator car within the elevator shaft, e.g. for typical elevator installations, a single-axis accelerometer may be suitable. It is understood that, in a typical use-case in which the elevator shaft is provided essentially vertically with respect to the earth's surface, an accelerometer may be provided such that gravity, as measured by the accelerometer, is not considered an acceleration of the elevator car, e.g. by biasing the accelerometer accordingly. The biasing may be obtained by biasing the accelerometer, and/or by adjusting the offset value, which will be explained in further detail herein with reference to embodiments. Accordingly, the motion data indicative of an acceleration may be indicative of an acceleration of the elevator car with respect to the elevator shaft, the elevator shaft being considered static.

According to an aspect, a motion sensor may include a tracking sensor. The tracking sensor may be configured for sensing a speed of the elevator car, particularly by sensing a movement of a surface, such as a surface fixedly provided in the elevator shaft, in relation to the tracking sensor fixedly provided on the elevator car. The tracking sensor may be an optical tracking sensor. The tracking sensor may include a one-dimensional sensor, such as an optical encoder, such as an optical linear encoder. The tracking sensor may include a two-dimensional sensor, such as an image sensor providing an image of the surface provided in the elevator shaft suitable for being evaluated by digital image correlation (DIC) and/or optical flow analysis. Known two-dimensional sensors include optical flow sensors. Motion data indicative of the speed of the elevator car may be derivable from the image, or a series of images captured over time, and evaluated as described above. Beneficially, an optical sensor based on a two-dimensional tracking sensor may be installed on the elevator car without requiring an encoded surface to be provided in the shaft, e.g. a rail having a textured surface, or even a wall of the elevator shaft may be sufficient for recording an image of suitable quality to be evaluated by the two-dimensional tracking sensor. From the tracking sensor, motion data indicative of a relative position of the elevator car over time may be derivable. Motion data indicative of a speed and/or an acceleration may be derived from the motion data indicative of a relative position of the elevator car.

According to an aspect, the motion sensor types described herein, particularly accelerometers and optical tracking sensors, are small and generally readily available as integrated or semi-integrated components. Thus, several independent motion sensors, such as at least two independent motion sensors, may be provided without significant added cost or space requirements. Beneficially, the sensors may be independent. Beneficially, the sensors may be provided in a single unit, e.g. on a single board and/or in a combined housing. The benefits of providing more than one motion sensor are further described herein with reference to embodiments, and particularly include redundancy, the ability of performing sanity checks, and/or determining a reliability parameter for each sensor. Furthermore, the sensors may be easily retrofitted to existing elevator installations, since the sensors may be installed on the elevator car, which is generally readily accessible by a service technician.

According to an aspect, the method of monitoring the elevator car includes utilizing and/or generating a dynamical system model of the elevator car in the elevator shaft. The dynamical system model may be generated by an evaluation unit. The dynamical system model describes a motion of the elevator car based on input variables. The input variables include the position data and the motion data. Dynamical systems are known in the art, and relate to the mathematical concept of functionally describing a point in an ambient space over time. An elevator car traveling in an elevator shaft may be described as a system with a single degree of freedom along the length of the elevator shaft, and may thus be described by Newtonian mechanics. A description of Newtonian mechanics is provided in Paul A. Tipler, Physics for Scientists and Engineers, 4th Edition, 1999, p. 19-44, ISBN: 1-57259-673-2, which is incorporated herein to the extent of the description of the underlying concept. The position, speed and acceleration of the elevator car is affected by external forces, as applied to the system by e.g. the elevator drive, brakes, and gravity, and the motion of the elevator car may, at least in a constant or semi-constant state, be described by the interrelated values position, speed, and acceleration. The input variable position may be directly obtainable from the position sensor providing position data. The input variables speed and/or acceleration of the elevator car may be directly obtainable from the motion sensors providing motion data. A speed of the elevator car may be derived form a difference in relative position over time, particularly as provided by a tracking sensor. A speed of the elevator car may further be derived from a motion data indicative of an acceleration of the elevator car, e.g. by integrating the acceleration over time. Likewise, an acceleration of the elevator car may be derivable from a motion data indicative of a speed of the elevator car. The position data and the motion data provided by the position sensor and the motion sensor may therefore be utilized as input variables for a dynamical system model, and the dynamical system model may be configured to represent the current state of the dynamical system, i.e. the elevator car traveling in the elevator shaft, based on the input variables. Likewise, provided that the dynamical system model has been initialized to model a movement of the elevator car, and no change of the dynamical system occurs, the dynamical system model may be utilized for predicting the position of the elevator car within the elevator shaft at essentially any point in time, which may beneficially allow the system model to provide an estimated position independently from some or all motion data or position data, particularly at points in time where a position data is not available from a position sensor. Likewise, an estimated acceleration and/or an estimated speed may be provided by the dynamical system model.

According to an aspect, determining the estimated position comprises evaluating the position data and the motion data with an estimation algorithm over a period of time. The estimation algorithm includes a representation of the dynamical system model. The evaluation unit may be configured for implementing the evaluation algorithm, e.g. as a software program to be executed on a processor of the evaluation unit. The estimation algorithm may include an algorithm for simulating the dynamical system. The estimation algorithm may include an algorithm for approximating the position of the elevator car within the elevator shaft based on Newtonian mechanics.

According to an aspect, the estimation algorithm may include a sensor fusion algorithm. The sensor fusion algorithm may be configured for combining sensory data, such as the position data and the motion data. The sensor fusion algorithm may be configured for evaluating known and/or observed sensor value uncertainties, such as sensor noise, drift, or uncertainties due to low data availability frequencies. For example, the sensor fusion algorithm may be based on Bayesian networks or even convolutional neural networks.

According to an aspect, the estimation algorithm incudes a Kalman filter or a variation of a Kalman filter such as the Extended Kalman filter or the Unscented Kalman filter for example; such filters are referenced as Kalman filters. A Kalman filter is described in Kim, Y., & Bang, H. (2019); Introduction to Kalman Filter and Its Applications; Introduction and Implementations of the Kalman Filter; doi:10.5772/intechopen.80600, which is incorporated herein to the extent of the description of the underlying concept. Generally, a Kalman filter may be a probabilistic mechanism for reasoning about a sequence of state variables at discrete time steps evolving under known mechanics that are assumed to be linear, and may, for an elevator car moving in an elevator shaft, be assumed to be based on Newtonian mechanics. The input variables, particularly the motion data and the position data, may be noisy. The Kalman filter may, based on the input variables, repeatedly apply Gaussian identities to reason about the evolution of a hidden state, i.e. the state of the elevator car comprising the position and/or speed of the elevator car. The Kalman filter may allow a prediction of the hidden state, particularly the position, speed and/or acceleration of the elevator car, based on previously observed input variables. The Kalman filter may be updated based on newly received input variables, particularly recursively updated.

According to an aspect, the method includes, and the evaluation unit is configured for, determining an offset value indicative of a motion data offset. The offset value is generated such that the dynamical system model fits the position of the elevator car as indicated by the position data.

According to an aspect, the dynamical system model, particularly when implemented as a Kalman filter, may be configured, e.g. by tuning, to consider the position data a low-error, high reliability and/or absolute position data. An offset value, as described herein, may be derived from the residual of the motion data input variable obtained in the update phase of the Kalman filter.

According to an aspect, the sensors described herein, particularly the combination of sensor types laser distance sensor and one or more accelerometers or one or more tracking sensors, may not function as ideal sensors, but may have technical limitations.

For example, a laser distance sensor as a position sensor may reliably provide position data with high accuracy, but at a limited rate. Furthermore, the accuracy of the laser distance sensor may be lower at high speeds of the elevator car, and/or provide an even further reduced frequency of reliable readings if the elevator car is in motion. For example, an accelerometer as the motion sensor may provide motion data at a high rate, but may drift over time, e.g. due to changes in temperature. For example, a tracking sensor as the motion sensor may experience localized drift or inaccuracy. A typical inaccuracy may include the (intermittent) lack of detection of motion, resulting in an erroneously low speed reading. Likewise, a change in distance between the surface tracked by a tracking sensor and the sensor may resulted in a position-dependent drift. All sensor types may experience short-time interruptions due to various external factors.

According to an aspect, the potential drift or inaccuracy of the motion sensor may be mitigated by assuming that the position data provided by the position sensor is accurate, and by repeatedly adapting the dynamical system model based on the position data. Accordingly, the dynamic system model may include an offset value, to be considered in combination with the motion data, so that the dynamical system model fits the position of the elevator car as indicated by the position data. The offset value may be determined by considering the position data an absolute position data, i.e. a position data indicative of an absolute position of the elevator car, and by determining a value by which the motion data needs to be adjusted so that the estimated position determined by the dynamical system model, at the point in time the position data is provided, corresponds to the absolute position of the elevator car. **In** a typical situation, the offset data may correspond to the drift of the motion sensor, such that, when the offset is added or subtracted to a value representing the motion data, the motion data may be utilized as an input variable of the dynamical system model.

According to an aspect, the method includes, and the evaluation unit is configured for, determining a sensor reliability parameter based on the offset value. The offset value may be indicative of a discrepancy between the motion data provided by the motion sensor and the state of the dynamical system model. For example, the dynamical system model may be initialized and indicate that the elevator car is static, i.e. not moving, while the motion data provided by an accelerometer incorrectly, e.g. due to a failure of an accelerometer, indicates a freefall of the elevator car. In the exemplary case, the input variable based on the motion data would be offset by a large offset value for the accelerometer to fit the position of the elevator car as indicated by the position data, e.g. an offset corresponding to the earth's gravity. A reliability parameter may be determined, based on the offset value, by defining reliability thresholds, and the reliability parameter may indicate that a motion sensor is unreliable or untrustworthy if the offset value exceeds the threshold. Likewise, a reliability parameter may be determined based on a frequency of offset value adjustments, a rate of change, and/or a sudden change in the offset value. Additionally, or alternatively, a reliability indicator indicating the offset value being outside of predefined acceptable levels, e.g. exceeding the threshold, may indicate that the sensors providing the input variables for the dynamical system model are not in mutual accordance. A reliability indicator indicating a lack of mutual accordance may be suitable for determining a potentially unsafe state, even without determining if a specific sensor, or which specific sensor, is providing erroneous data.

According to an aspect, in embodiments having multiple sensors, particularly multiple motion sensors, the reliability parameter may further be determined by comparing the offset values for each of the sensors.

According to an aspect, while determining the offset value is described for the motion data and/or the motion sensors, a reliability parameter may also be determined for the position sensor. Since the offset value is determined so that the dynamical system model fits the position of the elevator car, a faulty position sensor may result in the offset values of all the motion sensors being adjusted, and the reliability parameter indicating a potential fault for all of the motion data and/or motion sensors. Accordingly, a state in which most or all offset values indicate that the motion sensors are considered unreliable or untrustworthy, may correspond to a state in which the position data and/or the position sensor is unreliable, and a position sensor reliability parameter may be determined therefrom.

According to an aspect, the position sensor, particularly a laser distance sensor, may acquire the position data at a first frequency. Acquiring the position data may include determining the sensor reading, optionally processing the sensor reading, and/or communicating position data based on the sensor reading to the evaluation unit. The first frequency may be low, a low frequency being considered a frequency below 100 Hz, below 50 Hz, below 20 Hz or even below 10 Hz. In some cases, the first frequency may be even lower, e.g. in some cases, the position sensor may provide position data only in random intervals, with potentially several seconds between each providing of position data. The first frequency may be variable, e.g. due to sensor limitations. For example, according to some embodiments, for some position sensor types, such as laser distance sensor types that do not sufficiently compensate for doppler shift, it may be beneficial to only acquire position data during slow travel or standstill. Accordingly, the low frequency may be defined by the travel profile of the elevator car.

According to an aspect, the motion sensor, particularly an accelerometer or a tracking sensor, may acquire the motion data at a second frequency. Acquiring the motion data may include determining the sensor reading, optionally processing the sensor reading, and/or communicating motion data based on the sensor reading to the evaluation unit. The second frequency may be high, a high frequency being considered a frequency above 100 Hz, above 200 Hz, above 500 Hz or even above 1 kHz. The second frequency may be variable, e.g. due to sensor limitations.

According to an aspect, the safety system may be configured for, and the method may include, determining the estimated position at a third frequency, the third frequency being higher than the first frequency. According to embodiments, the third frequency may be any frequency, e.g. a frequency higher than the first frequency and the second frequency. Accordingly, the third frequency may be limited essentially by the speed of the calculation required for providing an estimated position based on the dynamical system model, e.g. an estimation algorithm. According to a preferred embodiment, the dynamical system model may be updated, e.g. by performing an update operation of the estimation algorithm based on the newly available motion data and/or updating the dynamical system model, at essentially the second frequency, or a frequency between the first frequency and the second frequency. Beneficially, the dynamical system model may be updated when position data or motion data becomes available, and an estimated position may be determined based on the updated dynamical system model. This may beneficially provide an accurate estimated position at a sufficiently high frequency, e.g. essentially the second frequency, while limiting the computational load.

Beneficially, the method and systems described herein allow accurately determining the position, speed and acceleration of an elevator car during the operation of an elevator installation. Different types of sensors are utilized, and the technical limitations of each sensor type may be overcome at least in part by generating a dynamical system model that utilizes position data and motion data for describing the dynamical system, i.e. the motion of the elevator car in the elevator shaft. In some embodiments, the safety system may be safety-rated. The safety-rating of the safety system may be higher than that of some or even all of the individual sensors utilized in the safety system. This may beneficially allow combining different sensor types e.g. according to the requirements of specific types of elevator installations, thereby increasing flexibility while maintaining a high safety standard. Beneficially, a sensor reliability parameter is determined, which may be utilized e.g. for determining potentially unsafe states.

Reference will now be made in detail to the various embodiments, one or more examples of which are illustrated in the figures. Within the following description of the drawings, the same reference numbers refer to same components. Generally, only the differences with respect to individual embodiments are described. Further, features illustrated or described as part of one embodiment can be used on or in conjunction with other embodiments.
- Fig. 1: shows a schematic elevator installation according to an embodiment;
- Fig. 2: shows a schematic diagram describing the evaluation of sensor data; and
- Fig. 3: shows a timeline describing the evaluation of sensor data.

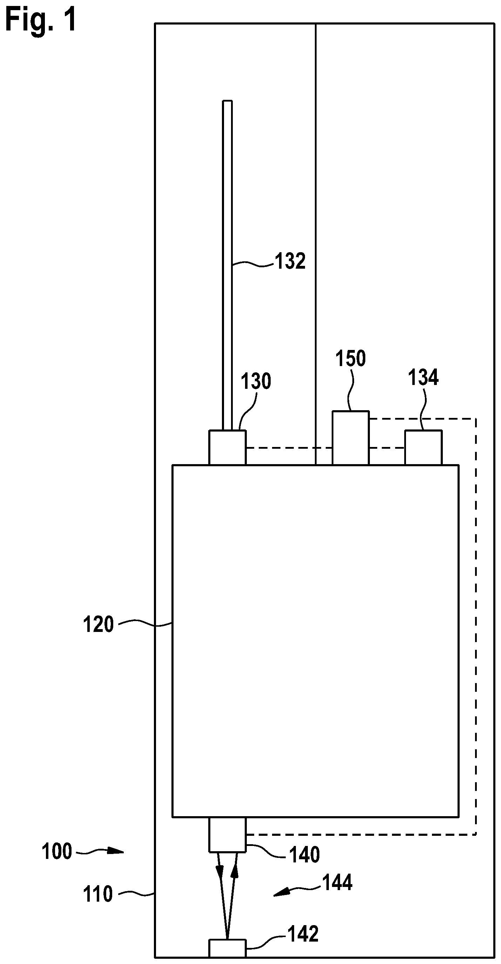

Fig. 1 shows an elevator installation 100 having an elevator shaft 110 and an elevator car 120 movably provided in the elevator shaft 110. The elevator car 120 is suspended on a cable which is driven by a drive system. Some components of the elevator installations, such as doors or counterweights, have been omitted in the figures for clarity. Further drive systems other than the cable-based drive system may be suitable, and the described subject-matter is not limited to the type of drive system shown in the figures.

The elevator installation 100 includes a position sensor 140. In the embodiment, the position sensor 140 is a laser distance sensor configured for emitting a laser beam 144 and receiving a reflection of the laser beam 144, and for determining a distance between the position sensor 140 and the reflector by measuring the time of the laser beam 144 to travel between emitting and receiving the laser beam. A reflector 142 is provided at a reference point at the bottom of the elevator shaft 110, however, according to embodiments, this reflector may be optional, i.e. the reference point may be formed of a surface of the elevator shaft 110. A reflector may be beneficial in embodiments having a long elevator shaft, e.g. in buildings having an elevator installation spanning more than e.g. 5 floors, to improve the signal quality of the reflected laser beam 144.

As shown in Fig. 1, the position sensor 140 may be installed at the bottom of the elevator car and emit the laser beam 144 towards the bottom of the elevator shaft, however, alternative installation positions, e.g. at the roof or the side of the elevator car 120 may be equally suitable. Likewise, a reference point, optionally including a reflector 142, may be provided at any position in the elevator shaft, particularly the top of the shaft, adjacent to the highest or lowest landing door, and/or a wall of the elevator shaft 110 adjacent or in proximity to a top or bottom of the elevator shaft 110.

As shown in Fig. 1, the elevator installation 100 includes a motion sensor 130, the motion sensor 130 being a tracking sensor for sensing a speed of the elevator car 120. The motion sensor 130 is installed on the elevator car 120 and moves with the elevator car. The motion sensor 130 is provided approximate a rail 132, the rail 132 being fixedly installed in the elevator shaft 110. The rail 132 serves as a reference surface for the motion sensor 130. According to embodiments, the motion sensor 130 may comprise a linear optical encoder, and the rail 132 may be optically encoded, e.g. with a surface pattern, such as a surface pattern comprising incremental lines.

According to embodiments, the motion sensor 130 may comprise a two-dimensional optical tracking sensor suitable for digital image correlation (DIC) and/or optical flow analysis, as described in the general portion of this invention.

Beneficially, in embodiments utilizing a two-dimensional tracking sensor, a non-encoded rail 132 may be utilized as the surface to be tracked by the tracking sensor, i.e. the tracking may be based on changes in the intrinsic surface texture of the rail. Beneficially, the rail 132 may be a rail of an existing elevator system, such as a guide rail. Beneficially, instead of a rail 132, any essentially flat surface of the elevator shaft, such as a wall, may be suitable for use with a two-dimensional tracking sensor. According to embodiments, the motion sensor 130 may include a light emitter, such as a light emitting diode or a laser diode, for illuminating a surface being tracked by the optical tracking sensor.

As shown in Fig. 1, the elevator installation 100 includes a motion sensor 134. The motion sensor 134 includes an accelerometer. The motion sensor 134 may be installed at any point in or on the elevator car 120, particularly since for accelerometers, no interaction with reference points or trackable surfaces provided in the elevator shaft 110 is required. The accelerometer may be configured for sensing an acceleration in the direction of travel of the elevator car 120 within the elevator shaft 110, i.e. essentially a vertical direction. Accordingly, the accelerometer may measure an acceleration corresponding to earth's gravity during standstill or constant movement of the elevator car, and may measure a value deviating from this acceleration when the elevator car is accelerated or decelerated.

As shown in Fig. 1 and indicated by the dotted line, each of the position sensor 140 and the motion sensors 130, 134 is communicatively connected to an evaluation unit 150. The evaluation unit 150 is shown in Fig. 1 as being provided on the elevator car, however, the evaluation unit 150 may also be provided at a different location, e.g. within the elevator shaft, a machine room or even a remote location. The evaluation unit 150 may include a processor, such as a microprocessor, a field-programmable gate array, and/or a central processing unit, for executing a software program. The evaluation unit 150 may be configured for receiving input variables, and include a memory for storing the software program and/or input variables, the input variables including the position data and the motion data as described herein. The software program, when executed on the processor, may be configured for generating a dynamical system model of the elevator car 120 moving within the elevator shaft 110, as described herein. The software program, when executed on the processor, may comprise an estimation algorithm, as described herein. The software program, when executed on the processor, may be configured for executing a method as described herein, in particularly determining an estimated position of the elevator car, determining an offset value indicative of a motion data offset, and determining a sensor reliability parameter based on the offset value. The evaluation unit 150 may be configured for receiving the motion data and the position data provided by the position sensor 140 and the motion sensors 130, 134 via the communicative connection. Accordingly, the evaluation unit 150 may comprise one or more interfaces for establishing the communicative connection. The evaluation unit 150 may further be configured for providing an output data, the output data including the sensor reliability parameter, and optionally the estimated position of the elevator car, and/or data derived from the sensor reliability parameter. The output data may further include additional data derivable from the dynamical system model, such as data indicating a speed of the elevator car, and/or an acceleration of the elevator car. The output data may be provided, via a communicative connection (not shown) to further components of the elevator installation, such as a control unit and/or a safety system (not shown). The safety system may include the evaluation unit 150.

As shown in Fig. 1, the elevator system 100 has a safety system including a position sensor 140, an evaluation unit 150, a motion sensor 130 being a tracking sensor, and a motion sensor 134 being an accelerometer.

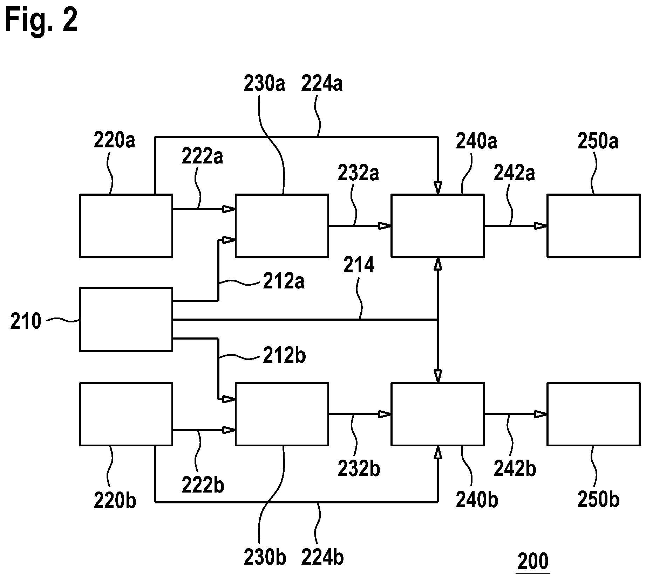

Alternatively, a safety system may include a position sensor such as the position sensor 140, and a single motion sensor, such as either the motion sensor 130 or the motion sensor 134. Likewise, the safety system may include more than one motion sensor, such as at least two motion sensors, such as the motion sensor 130 or the motion sensor 134, and the more than one motion sensors may be of the same type. In a beneficial example, which will be discussed in further detail with reference to Fig. 2, the safety system may include two motion sensors 134, e.g. two independent accelerometers. Likewise, in a further example, the safety system may include two motion sensors 130, e.g. two independent tracking sensors.

As shown in Fig. 1, the components of the safety system described herein may be individual components, i.e. individually providable at different locations. Beneficially, particularly the motion sensors 130 and 134, and/or the evaluation unit, may be combined in a single physical unit, e.g. on a single board, and/or within a combined housing. Likewise, even the position sensor 140 may be included in the single unit, e.g. in configurations having one or more motion sensors 134. A safety system combined as a single unit may beneficially reduce the effort required for installing and/or retrofitting the safety system.

Referring now to Fig. 2, a schematic diagram describing the evaluation 200 of sensor data is shown. The evaluation 200 described in Fig. 2, particularly the blocks 230a, 230b, 240a, 240b, and/or 250a, 250b may be performed by an evaluation unit, such as the evaluation unit 150.

Block 210 represents the acquiring of position data, e.g. by a position sensor, such as the position sensor 140. Blocks 220a and 220b represent the acquiring of motion data, e.g. by independent motion sensors, such as two independent motion sensors, such as the motion sensor 134. While the embodiment is described for motion sensors including accelerometers providing motion data indicative of an acceleration of the elevator car, alternative embodiments may include various types and combinations of motion sensors and be suitable for various types and combinations of motion data. Likewise, aspects of the embodiment unrelated to deriving information from more than one independent motion data may likewise be implemented for an embodiment having one position sensor and one motion sensor, i.e. a single evaluation stream may be utilized.

As shown in Fig. 2, the embodiment has two independent evaluation streams or channels including blocks 220a-250a and 220b-250b. The position data acquired in block 210 is shared between the two independent evaluation streams. In yet further embodiments, the evaluation 200 may be performed on only one evaluation stream, or even more than two evaluation streams, i.e. further evaluation streams essentially identical to the evaluation streams shown in Fig. 2 may be added. The evaluation streams may operate independently, particularly asynchronous.

The motion data acquired in blocks 220a, 220b is transferred, via communicative connections 222a, 222b, to blocks 230a, 230b. The blocks 230a, 230b may be filter blocks, sensor fusion blocks and/or estimation algorithm blocks. Likewise, the position data acquired in block 210 is transferred, via communicative connections 212a, 212b, to blocks 230a, 230b. According to embodiments, the blocks 230a, 230b include a sensor fusion algorithm, particularly a Kalman filter, for generating a dynamical system model of the elevator car 120 moving in the elevator shaft 110. The motion data is indicative of a motion of the elevator car, and may include at least one of an acceleration of the elevator car and/or a speed of the elevator car. The position data may be indicative of the position of the elevator car, and may include position data as described herein. Accordingly, in blocks 230a, 230b, the dynamical system model can be initialized to describe a motion of the elevator car, based on the motion data and the sensor data provided by blocks 210, 220a, and 220b.

In blocks 230a, 230b, output data is generated, based on the initialized dynamical system model. In the embodiment, the output data includes an estimated position of the elevator car and an offset value indicative of a motion data offset, as described herein. The output data may, additionally or alternatively to the estimated position, include an estimated speed of the elevator car, an estimated acceleration of the elevator car, an estimated change of the acceleration of the elevator car over time, and/or a confidence indicator, such as an (estimated) error margin or an (estimated) standard deviation for each of the output data.

According to embodiments, additional input variables may be transferred to blocks 230a, 230b. For example, additional position data may be available from other sensors provided in the elevator installation, such as position data derivable from door sensors when the elevator car is stationary at a landing, or passing a landing door while traveling. Accordingly, the additional position data may be utilized in addition to the position data acquired in block 210.

According to embodiments, the output data may be directly utilized, e.g. by a controller of the elevator system (not shown) communicatively connected to one or more of the blocks 230a, 230b, to control an operation of the elevator system based on the output data. For example, the estimated position and the estimated speed may be utilized to control the elevator drive to accurately align the elevator car to a landing door.

According to embodiments, the evaluation 200 may further be used for determining a safety state of the elevator installation. Accordingly, the output data generated by a method described herein may be used for determining a safety state of the elevator installation. As shown in Fig. 2, the output data is transferred to safety blocks 240a, 240b, via communicative connections 232a, 232b. Furthermore, the position data and the motion data acquired by blocks 210, 220a, 220b may be transferred to the safety blocks 240a, 240b via communicative connections 224a, 224b and 214. Thus, the safety blocks 240a, 240b may individually evaluate the data to detect potentially unsafe states, and further cross-correlate the transferred data to evaluate the data to detect potentially unsafe states. Additionally, the evaluation results of the independent safety blocks 240a, 240b may be transferred (not shown) between the safety blocks 240a, 240b and compared to that of the other safety blocks 240a, 240b. This may allow determining if an unsafe state was detected due to the elevator system being in an unsafe state, or due to an erroneous sensor reading in an otherwise safe state.

According to embodiments, the safety blocks 240a, 240b may be configured to evaluate the position data and the motion data, particularly by performing sanity checks on the position data and/or the motion data acquired in blocks 210, 220a and 220b. The results of the evaluation may be included in a sensor reliability parameter. The motion data and/or the sensor data received via communicative connections 224a, 224b and 214 may be evaluated based on the availability frequency of data. For example, it may be determined if the sensors providing the data provide the data at the expected frequency. A lower than expected frequency or a lack of data may indicate a sensor failure. Additionally, or alternatively, the position data may further be evaluated based on unexpected readings. For example, abrupt changes in position or "jumps", e.g. changes in position as indicated by the position data exceeding a predefined threshold, may indicate a position sensor failure.

According to embodiments, the safety blocks 240a, 240b may be configured to evaluate the output data, particularly by performing sanity checks on the output data acquired in blocks 230a and 230b, and received via communicative connections 232a, 232b. A sensor reliability parameter based on the offset value is determined. The reliability of a motion sensor having a high offset value may be considered low, and/or an offset value exceeding a predefined threshold may be considered unreliable or untrustworthy. The reliability parameter may be an output data of the safety blocks 240a, 240b. Likewise, further parameters, such as any data received by the safety blocks 240a, 240b, may be included in the output data of the safety blocks 240a, 240b. Furthermore, a discrepancy between the data received by the safety blocks 240a, 240b may be determined and included in the output data of the safety blocks 240a, 240b.

As shown in Fig. 2, the output data of the safety blocks 240a, 240b may be transferred, via communicative connections 242a, 242b, to control blocks 250a, 250b. Control blocks 250a, 250b may be included in the safety system. Alternatively, the control blocks 250a, 250b may be provided in a controller of the elevator installation. The control blocks 250a, 250b may, based on the input data received via the communicative connections 242a, 242b, perform certain control operations, such as logging a sensor reliability warning or error, reducing the speed of the elevator car to a safe speed, applying brakes of the installation, stopping the elevator car, putting the elevator installation into a failsafe state, or the like. A control operation may be executed when one or both of the safety blocks 240a, 240b have provided a sensor reliability parameter indicative of a sensor failure or an unreliable sensor.

A control operation may further be executed if any of the parameters position, speed and/or acceleration exceed predefined safe values, e.g. exceed a predefined threshold value. For example, a speed or acceleration of the elevator car may exceed a predefined threshold. For example, a position of the elevator car may be closer to e.g. the shaft top or bottom than what is defined as safe, or defined as safe at a given speed. Accordingly, the output data may, in addition to the sensor reliability parameter, include any of the parameters (estimated) acceleration, (estimated) speed, (estimated) position, as well as further parameters described herein, and be evaluated by the control blocks 250a, 250b for detecting potentially unsafe states.

A control operation may be executed if a discrepancy between the parameters provided to one safety block in relation to the other safety block is detected. The parameters position, speed, and/or acceleration may include both directly measured values, i.e. sensor data, and values estimated based on the dynamical system model and/or estimated by the estimation algorithm of blocks 230a, 230b.

Beneficially, the evaluation described herein, such as with reference to Fig. 2, allows detecting potentially unsafe states or component failures, such as sensor failures or sensor unreliability, not only by analyzing the raw sensor data, but also by considering the sensor values in the context of a dynamical system model describing the motion of the elevator car. This may facilitate the detection of the fault causing the error. Based on the offset values determined for the motion sensor data, it may be possible to identify if either a motion sensor or a position sensor provides unreliable data based on an increase in the offset value required to fit the sensor data to the dynamical system model. Unreliable sensors may be identified even before a complete sensor failure occurs, thus increasing safety and passenger comfort by e.g. allowing a technician to identify and replace one or more unreliable sensors even before further potential issues arise.

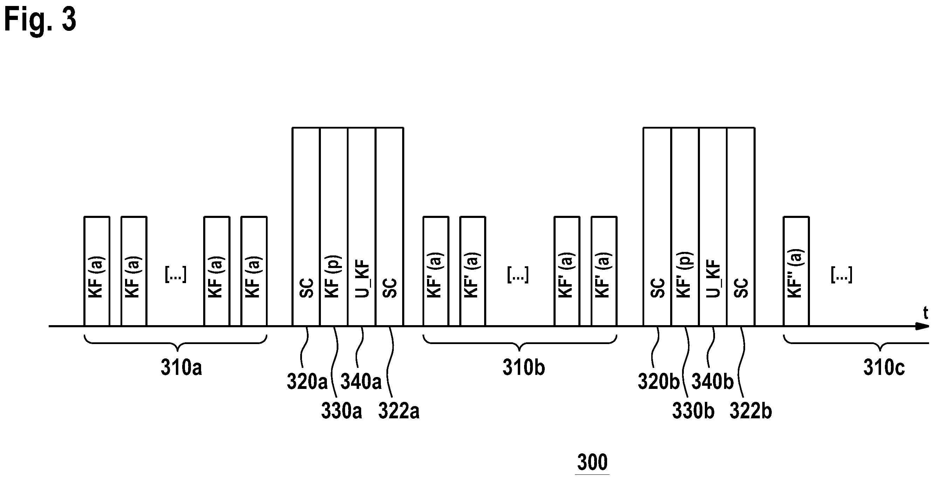

Referring now to Fig. 3, a timeline 300 describing the evaluation of sensor data over a period of time according to an embodiment is described. The timeline 300 shows sequential operations 310a through 310c. As previously discussed, in a typical embodiment, the dynamical system model may be generated by an estimation algorithm such as a Kalman filter, and the embodiment will be explained with reference to a Kalman filter, however, other estimation and/or sensor fusion algorithms may be utilized. As previously discussed, in a typical embodiment, motion data may be available at a higher frequency than position data. In some embodiments, an accurate estimation of the elevator car position may be possible based on the motion data alone for extended durations, such as e.g. for several seconds or even minutes. In the embodiment shown in Fig. 3, the motion data includes acceleration data, however, motion data indicative of a speed of the elevator car may be utilized instead. The operations described with reference to timeline 300 may be implemented in a system, such as the safety system described with reference to Fig. 1, and/or be implemented as an evaluation stream of the evaluation streams described with reference to Fig. 2.

In operations 310a, the Kalman filter is initialized and repeatedly updated based on the availability of motion data indicative of a motion, i.e. an acceleration, of the elevator car. Updated, in this context, describes the update step of the Kalman filter, i.e. the adapting of the dynamical system model to fit the measured state, based on the new motion data. According to the embodiment, each time new motion data becomes available, an estimated position of the elevator car is determined based on the updated dynamical system model, i.e. the estimated position is repeatedly determined.

In operation 330a, position data indicative of an absolute position of the elevator car relative to the elevator shaft is available. The position data is used to update the Kalman filter and generate an estimated position based on the position data, and/or both the input variables motion data and position data.

Before the Kalman filter is updated, a sanity check 320a may be performed. The sanity check may include comparing the estimated position data obtained from the Kalman filter with the position data indicative of the absolute position of the elevator car. The sanity check may include comparing the estimated position with the absolute position indicated by the position data, and checking if the estimated position correlates with the absolute position, e.g. by checking if the estimated position and the absolute position deviate by less than a predefined threshold. For example, if the estimated position deviates from the absolute position, a sensor reliability parameter indicating a potential fault in either one or both of the motion sensor and the position sensor may be generated.

Additionally, or alternatively, a sanity check 322a may be performed as described for the sanity check 320a after the Kalman filter is updated in operation 330a, or after the offset values have been determined, as described for operation 340a.

In operation 340a, based on the position data, the position data being considered indicative of an absolute position, the dynamical system model is further updated to fit the absolute position by determining an offset value indicative of a motion data offset.

After the offset value is determined in operation 340a, the sanity check 322a is performed. In addition to the optional operations described for the sanity check 320a, which may also be performed for sanity check 322a, it is determined whether the offset value exceeds a threshold value, e.g. a predetermined threshold value. Pertaining to this aspect, additionally, or alternatively, it may be determined if the rate of change of the offset value, e.g. as described in the general section of the invention, exceeds a predetermined threshold value. If the threshold value is exceeded, a sensor reliability parameter indicating a potential fault in either one or both of the motion sensor and the position sensor may be generated. Furthermore, a failsafe state may be entered in which no further estimated positions are generated, and/or the control operations as described for control blocks 250a, 250b may be executed.

If the sanity checks 320a, 322a indicate that the estimated position correlates with the absolute position derived from the position data and the offset value does not exceed the threshold value, then the safety system or method implementing the evaluation of sensor data according to the embodiment may proceed to repeatedly execute the operations described herein, i.e. repeatedly estimate the position in operations 310b as was described for operations 310a, and, when new position data becomes available, execute the operations 320a, 330b, 340b and 322b as was described for operations 320a, 330a, 340a and 322a. The process may be repeated essentially indefinitely.

Beneficially, for systems and methods implementing the evaluation 200, particularly according to the operations described with reference to the timeline 300, the estimated position data is available at a higher frequency, based on motion sensor data, than the absolute position data provided by a position sensor. Likewise, the safety-relevant parameters speed and acceleration may be monitored more reliably, based on the estimated parameters in combination with the sensor reliability parameter.

## Claims

1. Method of monitoring an elevator car (120) in an elevator shaft (110), the method comprising:
acquiring position data (210) indicative of a position of the elevator car;
acquiring motion data (220a, 220b) indicative of a motion of the elevator car;
determining (230a, 230b), from a dynamical system model, an estimated position of the elevator car, the dynamical system model describing a motion of the elevator car based on input variables, the input variables including the position data and the motion data;
**characterized in that** the method further comprises:
determining an offset value indicative of a motion data offset, wherein the offset value is generated such that the dynamical system model fits the position of the elevator car indicated by the position data;
determining a sensor reliability parameter based on the offset value; and
providing output data comprising the sensor reliability parameter.

2. The method according to claim 1, wherein determining the estimated position comprises evaluating the position data and the motion data with an estimation algorithm over a period of time, wherein the estimation algorithm includes a representation of the dynamical system model.

3. The method according to claim 2, wherein the estimation algorithm comprises a sensor fusion algorithm and/or a Kalman filter.

4. The method according to any one of the preceding claims, wherein acquiring the motion data (220a, 220b) comprises acquiring the motion data with at least two independent sensors.

5. The method according to the preceding claim, further comprising independently evaluating the motion data.

6. The method according to any one of the preceding claims, wherein the motion data is indicative of at least one of a speed of the elevator car and/or an acceleration of the elevator car.

7. The method according to any one of the preceding claims, wherein the position data is indicative of an absolute position of the elevator car in the elevator shaft.

8. The method according to any one of the preceding claims, wherein
the position data is indicative of an absolute position of the elevator car, the method further comprising:
repeatedly determining the estimated position of the elevator car based on the motion data;
after acquiring the position data, performing operations a.) through c.):
a.) adapting the dynamical system model to fit the absolute position and determining whether the offset value exceeds a threshold value;
b.) comparing the estimated position with the absolute position indicated by the position data; and
c.) under the proviso that
- the estimated position correlates with the absolute position derived from the position data, and
- the offset value and/or a rate of change of the offset value does not exceed the threshold value:
proceeding to repeatedly determine the estimated position of the elevator car based on the motion data.

9. A safety system for monitoring an elevator car in an elevator shaft, comprising:
a position sensor (140) configured for acquiring position data (210) indicative of a position of the elevator car;
a motion sensor (130, 134) configured for acquiring motion data (220a, 220b) indicative of a motion of the elevator car;
an evaluation unit (150) configured for:
receiving input variables comprising the motion data and the position data;
determining, from a dynamical system model, an estimated position of the elevator car, the dynamical system model describing a motion of the elevator car based on input variables, the input variables including the position data and the motion data; **characterized in that** the evaluation unit (150) is further configured for:
determining an offset value indicative of a motion data offset, wherein the offset value is generated such that the dynamical system model fits the position of the elevator car indicated by the position data;
determining a sensor reliability parameter based on the offset value; and
providing output data comprising the sensor reliability parameter.

10. The safety system according to claim 9, wherein the evaluation unit (150) is configured for implementing an evaluation algorithm, wherein the evaluation algorithm is configured for evaluating the position data and the motion data over a period of time to determine the estimated position and the offset value.

11. The safety system according to any one of the claims 9 to 10, wherein
the position sensor (140) is configured for acquiring position data at a first frequency, and
the motion sensor (130, 134) is configured for acquiring motion data at a second frequency, wherein
the first frequency is lower than the second frequency, and wherein
the safety system is configured for determining the estimated position at a third frequency higher than the first frequency.

12. The safety system according to any one of the claims 9 to 11, wherein the position sensor (140) is configured for sensing a distance between the elevator car and a reference point within the elevator shaft.

13. The safety system according to any one of the claims 9 to 12, wherein the position sensor (140) comprises a laser distance sensor.

14. The safety system according to any one of the claims 9 to 13, wherein the motion sensor (130, 134) comprises at least one of:
an accelerometer for sensing an acceleration of the elevator car, and
a tracking sensor for sensing a speed of the elevator car.

15. Use of the output data generated by a method according to any one of claims 1 to 8, or a safety system according to claims 9 to 14, for determining a safety state of an elevator installation, wherein the output data includes one or more of the estimated position, an estimated speed and/or an estimated acceleration of the elevator car.

## Patentansprüche

1. Verfahren zur Überwachung einer Aufzugskabine (120) in einem Aufzugsschacht (110), wobei das Verfahren umfasst:
Erfassen von Positionsdaten (210), die eine Position der Aufzugskabine angeben;
Erfassen von Bewegungsdaten (220a, 220b), die eine Bewegung der Aufzugskabine angeben;
Ermitteln (230a, 230b) einer geschätzten Position der Aufzugskabine anhand eines dynamischen Systemmodells, wobei das dynamische Systemmodell eine Bewegung der Aufzugskabine auf der Grundlage von Eingabevariablen beschreibt und die Eingabevariablen die Positionsdaten und die Bewegungsdaten umfassen;
**dadurch gekennzeichnet, dass** das Verfahren ferner umfasst:
Ermitteln eines Offset-Werts, der einen Versatz der Bewegungsdaten angibt, wobei der Offset-Wert so erzeugt wird, dass das dynamische Systemmodell an die durch die Positionsdaten angegebene Position der Aufzugskabine angepasst wird;
Ermitteln eines Sensorzuverlässigkeitsparameters auf der Grundlage des Offset-Werts; und
Bereitstellen von Ausgabedaten, die den Sensorzuverlässigkeitsparameter umfassen.

2. Verfahren nach Anspruch 1, wobei das Bestimmen der geschätzten Position das Auswerten der Positionsdaten und der Bewegungsdaten mit einem Schätzalgorithmus über einen Zeitraum umfasst, wobei der Schätzalgorithmus eine Darstellung des dynamischen Systemmodells enthält.

3. Verfahren nach Anspruch 2, wobei der Schätzalgorithmus einen Sensorfusionsalgorithmus und/oder einen Kalman-Filter umfasst.

4. Verfahren nach einem der vorstehenden Ansprüche, wobei das Erfassen der Bewegungsdaten (220a, 220b) das Erfassen der Bewegungsdaten mit mindestens zwei unabhängigen Sensoren umfasst.

5. Verfahren nach dem vorstehenden Anspruch, das ferner das unabhängige Auswerten der Bewegungsdaten umfasst.

6. Verfahren nach einem der vorstehenden Ansprüche, wobei die Bewegungsdaten mindestens eine der folgenden Größen angeben: eine Geschwindigkeit der Aufzugskabine und/oder eine Beschleunigung der Aufzugskabine .

7. Verfahren nach einem der vorstehenden Ansprüche, wobei die Positionsdaten eine absolute Position der Aufzugskabine im Aufzugsschacht angeben.

8. Verfahren nach einem der vorstehenden Ansprüche, wobei
die Positionsdaten eine absolute Position der Aufzugskabine angeben, wobei das Verfahren ferner umfasst:
wiederholtes Ermitteln der geschätzten Position der Aufzugskabine auf der Grundlage der Bewegungsdaten;
nach dem Erfassen der Positionsdaten die Durchführung der Schritte a.) bis c.):
a.) Anpassen des dynamischen Systemmodells an die absolute Position und Ermitteln, ob der Versatzwert einen Schwellenwert überschreitet;
b.) Vergleichen der geschätzten Position mit der durch die Positionsdaten angegebenen absoluten Position; und
c.) unter der Voraussetzung, dass
- die geschätzte Position mit der aus den Positionsdaten abgeleiteten absoluten Position korreliert und
- der Offset-Wert und/oder die Änderungsrate des Offset-Werts den Schwellenwert nicht überschreitet:
wird fortgefahren mit der wiederholten Bestimmung der geschätzten Position der Aufzugskabine auf der Grundlage der Bewegungsdaten.

9. Ein Sicherheitssystem zur Überwachung einer Aufzugskabine in einem Aufzugsschacht, umfassend:
einen Positionssensor (140), der zur Erfassung von Positionsdaten (210) ausgelegt ist, die eine Position der Aufzugskabine angeben;
einen Bewegungssensor (130, 134), der zum Erfassen von Bewegungsdaten (220a, 220b) ausgelegt ist, die eine Bewegung der Aufzugskabine anzeigen;
eine Auswerteeinheit (150), die dazu ausgelegt ist:
Empfangen von Eingabevariablen, die die Bewegungsdaten und die Positionsdaten umfassen;
Ermitteln einer geschätzten Position der Aufzugskabine anhand eines dynamischen Systemmodells, wobei das dynamische Systemmodell eine Bewegung der Aufzugskabine auf der Grundlage von Eingabevariablen beschreibt und die Eingabevariablen die Positionsdaten und die Bewegungsdaten umfassen;
**dadurch gekennzeichnet, dass** die Auswerteeinheit (150) ferner dazu ausgelegt ist:
Ermitteln eines Offset-Werts, der einen Versatz der Bewegungsdaten angibt, wobei der Offset-Wert so erzeugt wird, dass das dynamische Systemmodell an die durch die Positionsdaten angegebene Position der Aufzugskabine angepasst wird;
Ermitteln eines Sensorzuverlässigkeitsparameters auf der Grundlage des Offset-Werts; und
Bereitstellen von Ausgangsdaten, die den Sensorzuverlässigkeitsparameter umfassen.

10. Das Sicherheitssystem nach Anspruch 9, wobei die Auswerteeinheit (150) dazu ausgelegt ist, einen Auswertealgorithmus auszuführen, wobei der Auswertealgorithmus dazu ausgelegt ist, die Positionsdaten und die Bewegungsdaten über einen Zeitraum hinweg auszuwerten, um die geschätzte Position und den Offset-Wert zu bestimmen.

11. Sicherheitssystem nach einem der Ansprüche 9 bis 10, wobei
der Positionssensor (140) so ausgelegt ist, dass er Positionsdaten mit einer ersten Frequenz erfasst, und
der Bewegungssensor (130, 134) so ausgelegt ist, dass er Bewegungsdaten mit einer zweiten Frequenz erfasst, wobei
die erste Frequenz niedriger ist als die zweite Frequenz, und wobei
das Sicherheitssystem dazu ausgelegt ist, die geschätzte Position mit einer dritten Frequenz zu ermitteln, die höher ist als die erste Frequenz.

12. Das Sicherheitssystem nach einem der Ansprüche 9 bis 11, wobei der Positionssensor (140) dazu ausgelegt ist, einen Abstand zwischen der Aufzugskabine und einem Referenzpunkt innerhalb des Aufzugsschachts zu erfassen.

13. Das Sicherheitssystem nach einem der Ansprüche 9 bis 12, wobei der Positionssensor (140) einen Laser-Entfernungssensor umfasst.

14. Sicherheitssystem nach einem der Ansprüche 9 bis 13, wobei der Bewegungssensor (130, 134) mindestens eines der folgenden Elemente umfasst:
einen Beschleunigungsmesser zum Erfassen einer Beschleunigung der Aufzugskabine und
ein Sensor zur Erfassung der Geschwindigkeit der Aufzugskabine.

15. Verwendung der durch ein Verfahren gemäß einem der Ansprüche 1 bis 8 oder durch ein Sicherheitssystem gemäß den Ansprüchen 9 bis 14 erzeugten Ausgangsdaten zur Bestimmung eines Sicherheitszustands einer Aufzugsanlage nach , wobei die Ausgangsdaten eine oder mehrere der folgenden Größen umfassen: die geschätzte Position, eine geschätzte Geschwindigkeit und/oder eine geschätzte Beschleunigung der Aufzugskabine.

## Revendications

1. Procédé de surveillance d'une cabine d'ascenseur (120) dans une cage d'ascenseur (110), le procédé comprenant :
l'acquisition de données de position (210) indiquant une position de la cabine d'ascenseur ;
l'acquisition de données de mouvement (220a, 220b) indiquant un mouvement de la cabine d'ascenseur ;
la détermination (230a, 230b), à partir d'un modèle de système dynamique, d'une position estimée de la cabine d'ascenseur, le modèle de système dynamique décrivant un mouvement de la cabine d'ascenseur sur la base de variables d'entrée, les variables d'entrée comprenant les données de position et les données de mouvement ;
**caractérisé en ce que** le procédé comprend en outre :
la détermination d'une valeur de décalage indicative d'un décalage des données de mouvement, la valeur de décalage étant générée de telle sorte que le modèle de système dynamique s'adapte à la position de la cabine d'ascenseur indiquée par les données de position ;
la détermination d'un paramètre de fiabilité du capteur sur la base de la valeur de décalage ; et
fournir des données de sortie comprenant le paramètre de fiabilité du capteur.

2. Procédé selon la revendication 1, dans lequel la détermination de la position estimée comprend l'évaluation des données de position et des données de mouvement à l'aide d'un algorithme d'estimation sur une période donnée, l'algorithme d'estimation incluant une représentation du modèle de système dynamique.

3. Procédé selon la revendication 2, dans lequel l'algorithme d'estimation comprend un algorithme de fusion de capteurs et/ou un filtre de Kalman.

4. Procédé selon l'une quelconque des revendications précédentes, dans lequel l'acquisition des données de mouvement (220a, 220b) comprend l'acquisition des données de mouvement à l'aide d'au moins deux capteurs indépendants.

5. Procédé selon la revendication précédente, comprenant en outre l'évaluation indépendante des données de mouvement.

6. Procédé selon l'une quelconque des revendications précédentes, dans lequel les données de mouvement indiquent au moins l'une parmi la vitesse de la cabine d'ascenseur et/ou l'accélération de la cabine d' .

7. Procédé selon l'une quelconque des revendications précédentes, dans lequel les données de position indiquent une position absolue de la cabine d'ascenseur dans la cage d'ascenseur.

8. Procédé selon l'une quelconque des revendications précédentes, dans lequel
les données de position indiquent une position absolue de la cabine d'ascenseur, le procédé comprenant en outre :
la détermination répétée de la position estimée de la cabine d'ascenseur sur la base des données de mouvement ;
après avoir acquis les données de position, effectuer les opérations a.) à c.) :
a.) l'adaptation du modèle de système dynamique pour qu'il corresponde à la position absolue et la détermination du fait que la valeur de décalage dépasse ou non une valeur seuil ;
b.) comparer la position estimée à la position absolue indiquée par les données de position ; et
c.) à condition que
- la position estimée soit en corrélation avec la position absolue dérivée des données de position, et
- la valeur de décalage et/ou le taux de variation de cette valeur ne dépassent pas la valeur seuil :
procéder à la détermination répétée de la position estimée de la cabine d'ascenseur sur la base des données de mouvement.

9. Système de sécurité destiné à surveiller une cabine d'ascenseur dans une cage d'ascenseur, comprenant :
un capteur de position (140) conçu pour acquérir des données de position (210) indiquant la position de la cabine d'ascenseur ;
un capteur de mouvement (130, 134) configuré pour acquérir des données de mouvement (220a, 220b) indiquant un mouvement de la cabine d'ascenseur ;
une unité d'évaluation (150) configurée pour :
recevoir des variables d'entrée comprenant les données de mouvement et les données de position ;
déterminer, à partir d'un modèle de système dynamique, une position estimée de la cabine d'ascenseur, le modèle de système dynamique décrivant un mouvement de la cabine d'ascenseur sur la base des variables d'entrée, les variables d'entrée comprenant les données de position et les données de mouvement ;
**caractérisée en ce que** l'unité d'évaluation (150) est en outre configurée pour :
déterminer une valeur de décalage indicative d'un décalage des données de mouvement, la valeur de décalage étant générée de telle sorte que le modèle de système dynamique s'adapte à la position de la cabine d'ascenseur indiquée par les données de position ;
déterminer un paramètre de fiabilité du capteur sur la base de la valeur de décalage ; et
fournir des données de sortie comprenant le paramètre de fiabilité du capteur.

10. Système de sécurité selon la revendication 9, dans lequel l'unité d'évaluation (150) est configurée pour mettre en œuvre un algorithme d'évaluation, ledit algorithme d'évaluation étant configuré pour évaluer les données de position et les données de mouvement sur une période donnée afin de déterminer la position estimée et la valeur de décalage.

11. Système de sécurité selon l'une quelconque des revendications 9 à 10, dans lequel
le capteur de position (140) est configuré pour acquérir des données de position à une première fréquence, et
le capteur de mouvement (130, 134) est configuré pour acquérir des données de mouvement à une deuxième fréquence, dans lequel
la première fréquence est inférieure à la deuxième fréquence, et dans lequel
le système de sécurité est configuré pour déterminer la position estimée à une troisième fréquence supérieure à la première fréquence.

12. Système de sécurité selon l'une quelconque des revendications 9 à 11, dans lequel le capteur de position (140) est configuré pour détecter une distance entre la cabine d'ascenseur et un point de référence à l'intérieur de la cage d'ascenseur.

13. Système de sécurité selon l'une quelconque des revendications 9 à 12, dans lequel le capteur de position (140) comprend un capteur de distance à laser.

14. Système de sécurité selon l'une quelconque des revendications 9 à 13, dans lequel le capteur de mouvement (130, 134) comprend au moins l'un des éléments suivants :
un accéléromètre destiné à détecter une accélération de la cabine d'ascenseur, et
un capteur de suivi destiné à détecter la vitesse de la cabine d'ascenseur.

15. Utilisation des données de sortie générées par un procédé selon l'une quelconque des revendications 1 à 8, ou par un système de sécurité selon les revendications 9 à 14, pour déterminer l'état de sécurité d'une installation d'ascenseur , dans laquelle les données de sortie comprennent au moins l'une parmi la position estimée, la vitesse estimée et/ou l'accélération estimée de la cabine d'ascenseur.
